# EUROPEAN PATENT SPECIFICATION

(11) **EP 3 159 639 B1**
(45) Date of publication and mention of the grant of the patent: **25.12.2019**
(21) Application number: 15190600.5
(22) Date of filing: 20.10.2015
(51) Int. Cl.: F27D 17/00, B01D 46/02, C21B 7/22, B01D 46/00, B01D 46/04, C21C 5/40

(54) **PROCESS FOR CLEANING FURNACE GAS**
VERFAHREN ZUR REINIGUNG VON GICHTGAS
PROCÉDÉ DE FILTRAGE POUR LE NETTOYAGE DE GAZ DE FOUR

(43) Date of publication of application: 26.04.2017
(73) Proprietor: Danieli Corus BV, 1951 ME Velsen Noord (NL)
(72) Inventor: EWALTS, Wouter Bernd, 2151 EV Nieuw Vennep (NL); KLUT, Pieter Dirk, 1901 KH Castricum (NL)
(74) Representative: De Vries & Metman

(56) References cited:
- WO-A1-2010/148437
- US-A- 4 507 130
- US-A- 4 668 253
- US-A- 5 421 845

## Description

### TECHNICAL FIELD

The invention relates to a process for dry dust removal of furnace gas resulting from metal production processes, in particular steel or iron production processes, such as blast furnace gas or gas produced with electric arc furnaces (EAF), basic oxygen furnaces (BOF) or with direct reduced iron (DRI) processes.

### BACKGROUND

Blast furnace gas typically has a relatively high carbon monoxide content, e.g., about 20 - 28 %, allowing use as a fuel gas in various types of burners. However, the dust content of blast furnace gas leaving the blast furnace is typically about 10 - 40 g/Nm³, which is too high for use in such burners. To ensure proper and stable functioning of the burners or other equipment using the blast furnace gas the dust content of the blast furnace gas must be lowered substantially. This is usually done with a two-step process. In a first step the larger dust particles are separated in a cyclone. In a second step the smaller particles are separated, usually by means of a scrubber in a wet process. Such a wet process requires significant water consumption and produces sludge and waste water, which require further treatment. The water scrubbing treatment also results in a drop of pressure and temperature of the treated blast furnace gas, which reduces its efficiency as a fuel gas in a downstream gas burner.

To overcome the drawbacks of wet gas cleaning processes it has been proposed to filter the gas by means of filter bags hanging down from a tube sheet, for instance in the article of Zhang Fu-Ming, "Study on Dry Type Bag Filter Cleaning Technology of BF Gas at Large Blast Furnace", Proceedings of the 5th International Congress on the Science and Technology of Ironmaking, p. 612 - 616, 2009, Shanghai, China.

Bag filters can be cleaned by a backflow, usually an inert gas, such as nitrogen, as for instance is disclosed in Lanzerstorfer and Xu, "Neue Entwicklungen zur Gichtgasreinigung von Hochofen: ein Uberblick", BH, vol. 195, p. 91-98, 2014. This can be done off-line or on-line. Off-line cleaning interrupts the filtering process. On-line cleaning has the drawback that the nitrogen gas cools and dilutes the blast furnace gas. To minimize this effect, the nitrogen flow must be ejected with short, very strong pulses using a minimum of nitrogen. These pulses should be very strong to create a shockwave opposite to the 2,5 bar main flow. The maximum length of the filter bags that can be cleaned with such on-line backflows is typically about 4 meters.

The same publication also discusses a Japanese filter device of Kokura Steel Works of 1982 that uses a counter flow of cleaned blast furnace gas for cleaning the filter bags. The filters are taken out of the gas flow and cleaned off-line. Similar off-line cleaning systems are disclosed in US 4,507,130 and US 4,668,253.

US 5,421,845 and WO 2010/148437 discloses back flushing systems with nozzles in an arm moving over the bag filters.

It is an object of the invention to provide a dry cleaning process for dust removal from blast furnace gas using bag filters with an on-line backflow with improved cleaning efficiency allowing the use of longer filter bags.

### SUMMARY

The object of the invention is achieved with a process for cleaning furnace gas according to claim 1.

Using filtered blast furnace gas for an on-line backflow does not cool or dilute the main blast furnace gas flow. Therefore, much larger amounts can be used than would be possible with nitrogen gas, so the pulses can be longer and may be less strong. Since larger amounts of backflow gas can be used per pulse, the filter bags that can be used, can be made much longer.

The returned backflow gas can be separated from the main flow continuously or intermittently, for instance when the differential pressure over the tube sheet is too high. The amount of returned gas may for example be about 0.1 to about 0.5 vol.% of the main gas flow.

Part of the claimed invention includes that the nozzles are arranged in an arm which is movable over the array of bag filters. The array of bag filters can for example comprise a number of concentric circular arrays, making maximum use of the space in the housing of the filter device, which is typically cylindrical in view of the pressurized process conditions. In that case, the arm with the nozzles may for instance be a rotating arm rotating about a central axis that is coaxial with the circular array of bag filters. The respective nozzles are arranged to pass bag filters having corresponding radial positions during rotation of the rotational arm, so each bag filter is passed by at least one nozzle during a cycle.

In top view the filter bags and the openings in the tube sheet may for example be circular or oval. Using oval filter bags helps to make optimum use of space if the filter bags are arranged in concentric circular arrays. Moreover, the time that a passing nozzle will be above a filter bag will be longer if the filter bags are oval with a radially extending short axis and a tangentially extending long axis, so the backflow pulses will be longer.

The pressure in the blast furnace gas flow in the main direction is typically at least 1,5 bar, e.g., at least 2 or at least 2,5 bar. At the nozzles the backflow pressure may for instance be about 0,1 - 1,2 bar, e.g., 0,5 - 1,0 bar, e.g., about 0,8 bar higher than the pressure within main gas flow in the main flow direction.

The use of cleaned blast furnace gas makes it possible to use much larger amounts of backflowing gas.

The disclosed process can effectively be carried out with a filter device for cleaning processing gas in a metal production process, comprising at least one vessel with:
- a gas inlet at a bottom section;
- a gas outlet at a top section;
- a tube sheet between the gas inlet and the gas outlet.
The tube sheet comprises an array of openings, each opening being provided with a filter bag hanging down from said opening. The gas outlet is connected to a discharge line. A return line connects a downstream section of the discharge line with a return inlet at the top end of the vessel. The return line may for example comprise a gas booster to return the clean gas with the desired overpressure. The return line may connect to a rotor with at least one radial arm rotatable about a central axis of the vessel, the rotatable arm defining a channel in communication with the return line, e.g., via a central channel of the rotor positioned coaxially within the vessel. The channel of the radial arm comprises downwardly directed nozzles with radial positions corresponding to radial positions of the openings in the tube sheet, so each bag filter is passed by at least one nozzle during a full cycle of the rotor.

### BRIEF DESCRIPTION OF THE DRAWINGS

The disclosed process and filter device will be further explained with references to the accompanying drawings showing an exemplary embodiment.
Figure 1: shows schematically a lay out for a filter device for cleaning blast furnace gas;
Figure 2: shows a rotor with nozzles for cleaning the bag filters of the filter device of Figure 1;
Figure 3: shows a detail of the rotor of Figure 2 in side view.

### DETAILED DESCRIPTION

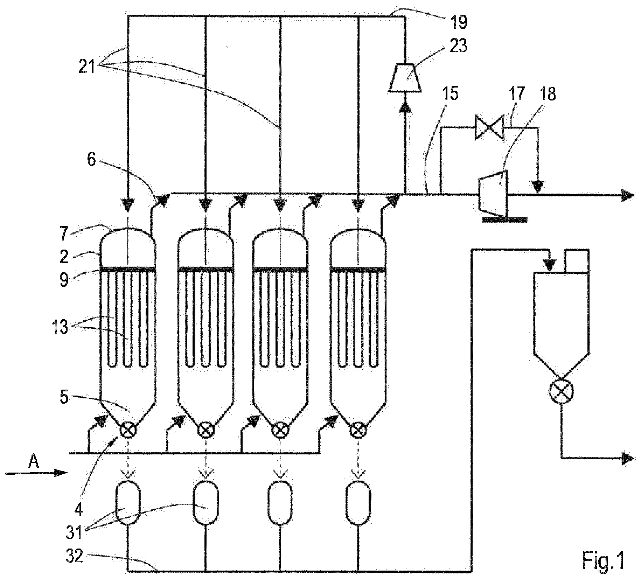

Figure 1 shows a lay out for a filtering device 1 for filtering blast furnace gas or process gas from similar metal production processes. The gas is supplied from direction A. Optionally, the gas is first treated by means of a dust removal device, such as a cyclone, e.g., for removal of larger dust particles, and/or the gas may first be cooled, e.g., to reduce temperature peaks, and/or treated with absorbents and/or basic agents to remove acidic and organic contaminants.

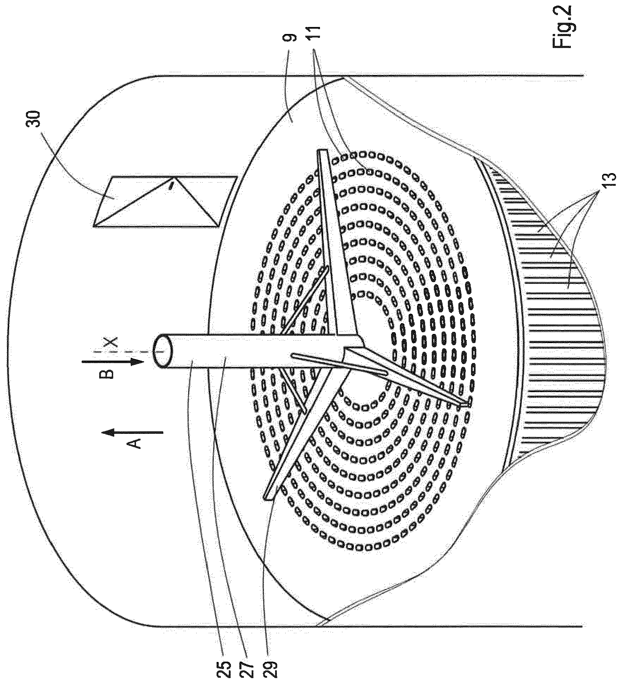

The blast furnace gas is distributed over a number of filter stations 2, in the shown exemplary arrangement four filter stations. Each one of the filter stations 2 comprises a cylindrical pressure vessel with a gas inlet 4 at a bottom section 5 of the vessel 2 and a gas outlet 6 at the top section 7 of the vessel 2. The blast furnace gas flows in a main flow direction A from the bottom section 5 of the vessel 2 to the top section 7. A circular tube sheet 9 is positioned at the top section 7 of the vessel 2. The tube sheet 9 is provided with concentric circular arrays of oval openings 11 (see Figure 2). The oval openings 11 have short axes in radial direction and long axis extending in tangential direction, relative to the central axis of the tube sheet. A filter bag 13 with a corresponding oval outline in top view hangs down from each opening 11. Each filter bag 13 has an open end connecting to the respective opening 11 in the tube sheet 9, and a closed end 14 at its opposite end. An open frame (not shown) is positioned in each filter bag 13 to keep the filter bag 13 open against the pressure of the main blast furnace gas flow. The peripheral edge of the tube sheet 9 is connected to the inner wall of the vessel 2, so that all of the blast furnace gas is forced to flow via the filter bags 13 in the openings 11.

The outlets 6 of the vessels 2 open into a common discharge line 15 where the filtered gas is discharged via a conventional top gas recovery turbine 18 in order to reduce the pressure by means of expansion. After the pressure reduction the gas can be used as a fuel for burners. A conventional pressure reduction valve 17 may be used as a back-up in case the top gas recovery turbine would not be operational.

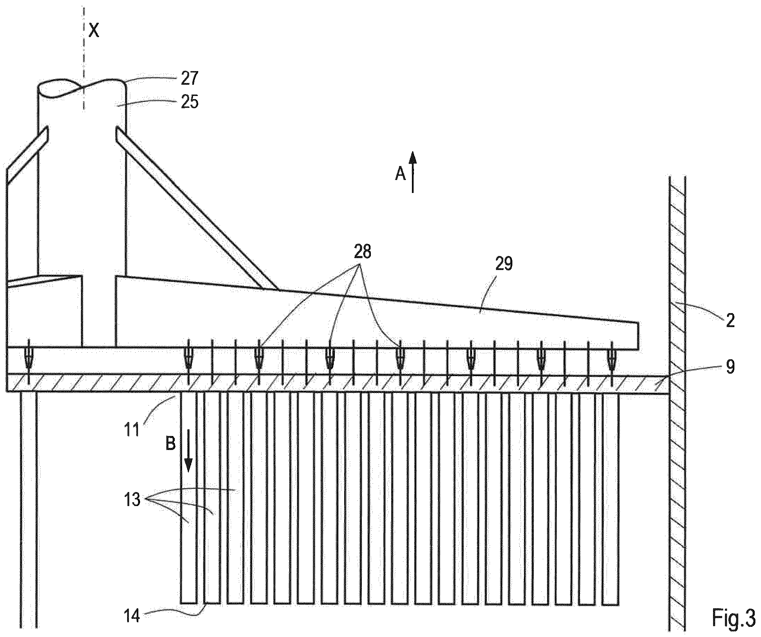

A main return line 19 branches off from the common discharge line 15 and splits into a number of return lines 21, one return line for each one of the vessels 2. The main return line 19 comprises a gas booster 23 increasing the pressure of the return flow to a level above the pressure in the main gas flow. Each return line 21 connects to a rotor 25, shown in more detail in Figures 2 and 3. The rotor 25 defines a substantially vertical central channel 27 coaxially positioned within the vessel interior in the space above the tube sheet 9. The rotor 25 is rotatable about a longitudinal axis X of the central channel 27. The rotor 25 comprises a number of radial hollow arms 29 connected to the lower end of the central channel 27. The radial arms 29 define channels with nozzles 28 at their side facing the tube sheet 9. The radius of each circle of openings 11 corresponds to the radial position of at least one of the nozzles 28 of at least one of the radial arms 29. In the shown embodiment, each spacing between two adjacent nozzles 28 of the arm 29 equals three times the distance between an opening 11 in the tube sheet 9 and a next opening 11 in radial direction. As a result only one out of three openings are cleaned by the nozzles 28 of one radial arm 29. The nozzles 28 of the other two arms 29 are arranged in such a way that they clean the remaining filter bags 13. Hence, during each full rotation of the rotor 25 each opening 11 in the tube sheet 9 is passed once by a nozzle 13 of one of the radial arms 29.

A door 30 provides access to the space above the tube sheet 9 for maintenance or repair.

The bottom sections 5 of the respective vessels 2 are conical and collect separated dust. Below the conical sections 5 of the vessels 2 are dust collection bins 31 connecting to a dust discharge line 32.

Raw blast furnace gas is supplied to the vessels 2 and passes the bag filters 13 in a main flow direction A. The pressure in the main flow at the inlet 4 of the vessel 2 is typically about 2,5 bar. Filtered gas is collected in the top sections 7 of the vessels 2, while dust remains at the outer surface of the filter bags 13.

Filtered gas collected downstream the tube sheet 9 is discharged via the respective outlets 6 and the discharge line 15. Part of the gas is continuously withdrawn via the return line 19. The gas booster 23 increases the pressure, e.g., to at least 3,3 bar, 0,8 bar higher than the pressure in the main flow.
Filtered gas flows via the return lines 21 to the top sections 7 of the respective vessels 2, via the central channel 27 and the three radial arms 29 of the rotor 25, where the gas is blown by the nozzles 28 in a backflow direction B which is opposite to the main flow direction A. The nozzles 28 blow the clean gas into the respective tube sheet openings 11 facing the respective nozzles when the nozzles pass by during rotation of the rotor 25. Since the central channel 27 and the radial arms 29 are continuously rotated each opening 11 is passed by a blowing nozzle 28 during a full rotation cycle of the rotor 25.

The gas blows into the openings 11 with an overpressure of, for example, about 0,8 bar. Dust collected on the outer surface of the filter bags 13 is blown away and falls down to the bottom section 5 of the vessel 2. This restores the filter capacity of the bag filter 13.

If sufficient dust is collected at the bottom section 5 of the vessels 2, a dust discharge valve is opened and the dust is collected in the respective collecting bins 31. The dust is further discharged via the dust discharge line 32, e.g., for further treatment.

## Claims

1. A process for cleaning furnace gas wherein the furnace gas flowing in a main flow direction (A) passes a circular array of bag filters (13),
wherein filtered furnace gas having passed the filter bags, is partly returned via one or more nozzles (28) which are moved along downstream ends of the bag filters,
wherein the nozzles (28) are arranged in at least one rotating arm (29) rotating about a central axis that is coaxial with the array of bag filters, wherein the respective nozzles (28) are arranged to pass bag filters having corresponding radial positions during rotation of the rotating arm;
wherein each bag filter (13) is passed at least once by at least one nozzle (28) during a rotation cycle of the arm,
wherein a nozzle passing a bag filter blows filtered furnace gas in a backflow direction (B) through said bag filter, wherein the backflow direction is opposite to the main flow direction.

2. The process of any preceding claim, wherein the backflow (B) is blown with 0,1 - 1,2 bar, e.g., 0,5 - 1,0 bar, e.g., about 0,8 bar overpressure relative to the pressure within the furnace gas flow in the main direction (A).

3. The process of any preceding claim, wherein the pressure in the furnace gas flow in the main flow direction (A) is at least 1,5 bar, e.g., at least 2,5 bar.

## Patentansprüche

1. Verfahren zur Reinigung von Gichtgas, wobei das in eine Hauptströmungsrichtung (A) strömende Gichtgas eine kreisförmige Anordnung von Beutelfiltern (13) passiert,
wobei gefiltertes Gichtgas, das die Filterbeutel passiert hat, teilweise über eine oder mehrere Düsen (28) zurückgeführt wird, die entlang stromabwärtiger Enden der Beutelfilter bewegt werden,
wobei die Düsen (28) in mindestens einem Dreharm (29) angeordnet sind, der sich um eine koaxial mit der Anordnung von Beutelfiltern verlaufende Mittelachse dreht, wobei die jeweiligen Düsen (28) so angeordnet sind, dass sie Beutelfilter passieren, die während der Drehung des Dreharms entsprechende radiale Positionen aufweisen;
wobei jeder Beutelfilter (13) während einer Umdrehung des Arms mindestens einmal von mindestens einer Düse (28) passiert wird,
wobei eine Düse, die einen Beutelfilter passiert, gefiltertes Gichtgas in eine Rückströmungsrichtung (B) durch den Beutelfilter bläst, wobei die Rückströmungsrichtung der Hauptströmungsrichtung entgegengesetzt ist.

2. Verfahren nach einem der vorstehenden Ansprüche, wobei die Rückströmung (B) mit 0,1 - 1,2 bar, z. B. 0,5 - 1,0 bar, z. B. etwa 0,8 bar Überdruck relativ zu dem Druck innerhalb des Gichtgasstroms in der Hauptrichtung (A) geblasen wird.

3. Verfahren nach einem der vorstehenden Ansprüche, wobei der Druck im Gichtgasstrom in die Hauptströmungsrichtung (A) mindestens 1,5 bar, z. B. mindestens 2,5 bar beträgt.

## Revendications

1. Procédé de nettoyage de gaz de four dans lequel les gaz de four circulant dans une direction principale d'écoulement (A) passent devant un réseau circulaire de filtres à manches (13),
dans lequel les gaz de four filtrés, après être passés devant les filtres à manches, sont partiellement renvoyés par l'intermédiaire d'une ou plusieurs buses (28) qui sont déplacées le long d'extrémités aval des filtres à manches,
dans lequel les buses (28) sont agencées dans au moins un bras rotatif (29) tournant autour d'un axe central qui est coaxial avec le réseau de filtres à manches, les buses respectives (28) étant conçues pour passer devant des filtres à manches ayant des positions radiales correspondantes pendant la rotation du bras rotatif ;
dans lequel au moins une buse (28) passe au moins une fois devant chaque filtre à manches (13) pendant un cycle de rotation du bras,
dans lequel une buse passant devant un filtre à manches envoie des gaz de four filtrés dans une direction de reflux (B) à travers ledit filtre à manches, la direction de reflux étant opposée à la direction principale d'écoulement.

2. Procédé **selon la revendication précédente,** dans lequel le reflux (B) est envoyé avec un excédent de pression de 0,1 à 1,2 bar, par exemple de 0,5 à 1,0 bar, par exemple d'environ 0,8 bar, par rapport à la pression dans le flux de gaz de four dans la direction principale (A).

3. Procédé selon une quelconque revendication précédente, dans lequel la pression du flux de gaz de four dans la direction principale (A) est d'au moins 1,5 bar, par exemple d'au moins 2,5 bars.
